# EUROPÄISCHE PATENTSCHRIFT

(11) **EP 1 736 646 B1**
(45) Veröffentlichungstag und Bekanntmachung des Hinweises auf die Patenterteilung: **02.01.2008**
(21) Anmeldenummer: 06012941.8
(22) Anmeldetag: 23.06.2006
(51) Int. Cl.: F01N 11/00, F02D 41/14, F02D 17/04

(54) **Verfahren zur Abschaltung des Verbrennungsmotors bei Brandgefahr**
Method for stopping an internal combustion engine in case of fire risk
Procédé d'arrêt d'un moteur à combustion interne en cas de risque de feu

(30) Priorität: 24.06.2005 DE 102005029339
(43) Veröffentlichungstag der Anmeldung: 27.12.2006
(73) Patentinhaber: Daimler AG, 70327 Stuttgart (DE)
(72) Erfinder: Böhm, Eike, Dr., 73733 Esslingen (DE); Marwitz, Hartmut, Dr. Prof., 73728 Esslingen (DE); Seifert, Jochen, 70619 Stuttgart (DE)

(56) Entgegenhaltungen:
- US-A- 6 068 528
- PATENT ABSTRACTS OF JAPAN Bd. 006, Nr. 089 (M-132), 27. Mai 1982 (1982-05-27) & JP 57 026227 A (NIPPON DENSO CO LTD), 12. Februar 1982 (1982-02-12)
- PATENT ABSTRACTS OF JAPAN Bd. 2000, Nr. 12, 3. Januar 2001 (2001-01-03) & JP 2000 265886 A (MITSUBISHI MOTORS CORP), 26. September 2000 (2000-09-26)

## Beschreibung

Die Erfindung betrifft ein Verfahren zur Steuerung eines Verbrennungsmotors mit Katalysator.

Katalysatoren erwärmen sich im Betrieb stark. Insbesondere nach längerem Volllastbetrieb können Temperaturen oberhalb 550°C erreicht werden. Nach Ende des Volllastbetriebes bleibt die hohe Volllasttemperatur noch längere Zeit (ca. 20 Min) aufrechterhalten. Diese Abkühlzeit kann sich noch deutlich verlängern, wenn das Fahrzeug anhält, ohne dass der Verbrennungsmotor abgeschaltet wird. In diesem Fall entfällt der kühlende Fahrtwind, die Zufuhr heißer Abgase hingegen bleibt erhalten.

Aus der DE 197 52 274 A1 ist ein Verfahren bekannt, welches zum Schutz eines im Abgasstrang eines Verbrennungsmotors angeordneten Katalysators vor Überhitzung dient. Dabei wird das Kraftstoff-Luftgemisch angefettet, wenn der Verbrennungsmotor unter Volllast eine kritische Katalysatortemperatur überschritten hat.

Aus der JP 57026227 ist eine Alarmvorrichtung bekannt. Dabei wird eine Abnormalitätsüberwachung gestartet, wenn die Abgastemperatur eines Katalysators einen ersten vorbestimmten Wert überschreitet. Wenn die Abgastemperatur einen zweiten vorbestimmten Wert überschreitet wird Brandgefahr durch einen Katalysator mit abnormal hoher Temperatur erkannt und ein optisches oder akustisches Signal abgegeben.

Aufgabe der Erfindung ist es, die Gefahr einer Überhitzung des Katalysators und die damit verbundene Gefahr eines Fahrzeugbrandes zu reduzieren.

Die Erfindung löst diese Aufgabe mit den Merkmalen des Anspruchs 1.

Dazu sieht das erfindungsgemäße Verfahren zur Steuerung eines Verbrennungsmotors mit einem Katalysator vor, dass eine Temperatur des Katalysators erfasst wird und bei Überschreiten einer vorgebbaren Katalysatortemperatur eine Brandgefahr erkannt und der Verbrennungsmotor abgeschaltet wird. Damit wird die Wärmezufuhr durch den Verbrennungsmotor abgestellt und die Brandgefahr vermieden. Die erfindungsgemäße Lösung verhindert, dass eine kritische Temperatur erreicht und/oder unnötig lange aufrechterhalten wird. Dies führt zu einer deutlichen Verringerung des Brandrisikos insbesondere beim Betrieb von Nutzfahrzeugen. Vorteil dieser Lösung ist, dass sie mit bereits serienmäßig vorhandenen Bauteilen auskommt und auch in bereits ausgelieferten Fahrzeugen durch Überspielen neuer Software nachträglich installiert werden kann.

In einer Ausführungsform werden weitere temperaturrelevante Fahrzeug- und Umgebungsdaten erfasst. Solche Daten können beispielsweise die Drehzahl des Verbrennungsmotors, das Drehmoment des Verbrennungsmotors, die Geschwindigkeit des Fahrzeugs und/oder die Außentemperatur sein. Diese Daten können helfen, die Auswirkung der erfassten Katalysatortemperatur auf ihre Umgebung besser zu beurteilen. So macht es einen Unterschied, ob eine bestimmte Katalysatortemperatur im Winter und bei hoher Fahrgeschwindigkeit oder unter tropischer Außentemperatur bei langsamer Fahrt und bei hohem Drehmoment vorliegt. Mit Hilfe der temperaturrelevanten Fahrzeug- und Umgebungsdaten ist des Weiteren eine Prognose über die weitere Temperaturentwicklung des Katalysators und seiner Umgebung möglich.

In einer Ausführungsform erfolgt eine Kennfeldauswertung der erfassten Daten, wobei das Ergebnis der Kennfeldauswertung eine Bewertung der Brandgefahr ist. Bei Vorliegen einer Brandgefahr wird der Verbrennungsmotor abgeschaltet. Das Kennfeld wird durch Versuche, Analysen und theoretische Betrachtungen ermittelt. Im Kennfeld sind mögliche Kombinationen von Rahmenbedingungen zusammen mit der Katalysatortemperatur einer entsprechenden Beurteilung hinsichtlich der Brandgefahr zugeordnet. Über das Kennfeld lässt sich feststellen, ob die Katalysatortemperatur in einen kritischen Bereich hineinläuft. Wenn beispielsweise ein Fahrzeug nach 20 Minuten im Volllastbetrieb für 5 Minuten im Leerlauf stillsteht, so kann anhand der aktuellen Katalysatortemperatur unter Berücksichtigung der anderen erfassten Daten (Außentemperatur etc.) ermittelt werden, ob in der nächsten Zeit eine kritische Temperatur erreicht werden wird. In diesem Fall kann eine Brandgefahr erkannt werden, obwohl die kritische Katalysatortemperatur noch nicht erreicht wurde. Damit kann eine kritische Katalysatortemperatur im Vorfeld verhindert werden.

In einer Ausführungsform wird bei Bestehen einer Brandgefahr die Fahrgeschwindigkeit des Fahrzeugs ermittelt. Der Verbrennungsmotor wird nur dann abgeschaltet, wenn das Fahrzeug eine vorgebbare Geschwindigkeitsgrenze unterschreitet. Damit wird verhindert, dass der Verbrennungsmotor während der Fahrt abgeschaltet wird.

In einer Ausführungsform erfolgt eine Signalisierung der Brandgefahr an den Fahrer. Damit kann der Fahrer sein Fahrverhalten entsprechend anpassen. Er kann beispielsweise auf Volllastbetrieb verzichten, oder eine Motor- oder Katalysatorkühlung zuschalten.

In einer Ausführungsform erfolgt eine Signalisierung einer bevorstehenden Abschaltung des Verbrennungsmotors an den Fahrer. Dadurch wird der Fahrer auf die bevorstehende Abschaltung des Motors vorbereitet. Er kann das Fahrzeug in eine sichere Parkposition bringen oder die Abschaltung des Motors abwenden, indem er das Fahrzeug bewegt.

In einer Ausführungsform kann der Fahrer die Abschaltung durch Betätigung eines Starters verhindern. Damit kann er verhindern, dass der Motor abgestellt wird, obwohl das Fahrzeug noch bewegt werden muss, weil es beispielsweise gerade auf den Schienen einer Eisenbahn steht. Damit können gefährliche Situationen verhindert werden.

In einer Ausführungsform wird ein Neustart des abgeschalteten Verbrennungsmotors zugelassen. Der Wagen kann auf Wunsch des Fahrers trotz Brandgefahr gestartet und bewegt werden. Damit kann der Fahrer selbst entscheiden, ob eine Situation das erneute Starten des Verbrennungsmotors notwendig macht.

In einer Ausführungsform erfolgt eine erneute Abschaltung des Verbrennungsmotors für eine vorgebbare Abkühlzeitdauer, wenn nach Ablauf einer Toleranzzeit nach einem Neustart oder der Verhinderung einer Abschaltung das Fahrzeug nicht bewegt wird. Wenn das Fahrzeug nicht bewegt wird und die Brandgefahr weiterhin besteht, wird das Fahrzeug abgeschaltet, bis die Brandgefahr nicht mehr besteht. Damit wird das Brandrisiko vermieden, ohne die Nutzung des Fahrzeuges signifikant einzuschränken.

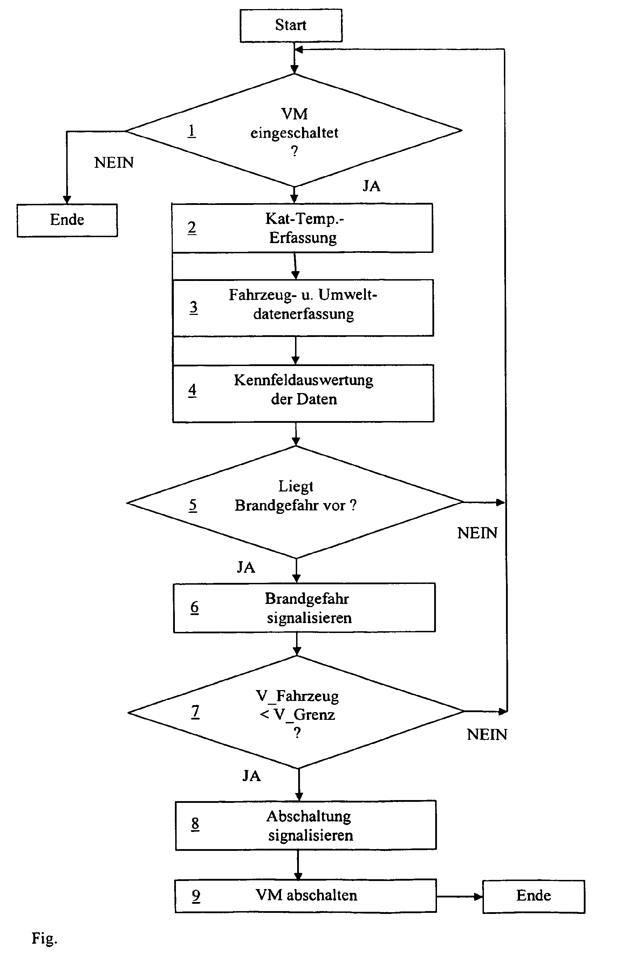

Weitere Merkmale und Merkmalskombinationen ergeben sich aus der Beschreibung sowie der Zeichnung. Im Folgenden wird anhand der Zeichnung eine Ausführungsform der Erfindung dargestellt und in der nachfolgenden Beschreibung näher erläutert.

Dabei zeigt die Fig. eine schematische Darstellung einer Ausführungsform des Verfahrens.

Nach dem Start des erfindungsgemäßen Verfahrens wird in einem ersten Schritt (1) überprüft, ob der Verbrennungsmotor eingeschaltet ist. Ist dies nicht der Fall, so wird das Verfahren beendet.

Ist der Verbrennungsmotor eingeschaltet, so wird in nächsten Schritt (2) die Temperatur des Katalysators erfasst. Dabei können eine oder mehrere Temperaturerfassungsstellen vorgesehen sein. Beispielsweise kann die Temperatur der in den Katalysator eintretenden Abgase und die Temperatur der aus dem Katalysator ausströmenden Abgase erfasst werden.

In einem weiteren Schritt (3) werden temperaturrelevante Fahrzeug- und Umweltdaten erfasst. Diese Daten geben Aufschluss über die Rahmenbedingungen, unter deren Berücksichtigung die Katalysatortemperatur zu interpretieren ist. Beispielsweise ist von Bedeutung, ob es Sommer oder Winter ist, dass Fahrzeug unter geringer, mittlerer oder schwerer Belastung fährt oder ob es steht.

In einem nachfolgenden Schritt (4) wird eine Kennfeldauswertung der Temperatur des Katalysators und der temperaturrelevanten Fahrzeug- und Umweltdaten durchgeführt. Ergebnis dieser Auswertung ist eine Beurteilung der Brandgefahr. Dabei ist als Ergebnis eine einfache Ja/Nein-Entscheidung, eine Bewertung in verschiedenen Gefährdungsstufen oder anderes möglich.

In einem nächsten Schritt (5) wird aufgrund des Ergebnisses der Kennfeldauswertung ermittelt, ob eine Brandgefahr vorliegt.

Liegt keine Brandgefahr vor, so beginnt das Verfahren wieder mit dem ersten Schritt (1) und überwacht weiter die Brandgefahr.

Bei Vorliegen einer Brandgefahr wird in der dargestellten Ausführungsform der Erfindung (Fig.) die Brandgefahr in einem weiteren Schritt (6) signalisiert. Diese Signalisierung kann über einen Warnton, durch eine Anzeige oder dergleichen oder durch eine Signalisierung an ein geeignetes Steuergerät des Fahrzeugs erfolgen.

In einem nächsten Schritt (7) wird die Fahrgeschwindigkeit V_Fahrzeug des Fahrzeuges überprüft. Dabei wird überprüft, ob die Geschwindigkeit V_Fahrzeug eine festgelegte Grenzgeschwindigkeit V_Grenz unterschreitet.

Liegt die Geschwindigkeit V_Fahrzeug auf oder oberhalb der Grenzgeschwindigkeit V_Grenz, so kann der Verbrennungsmotor nicht abgeschaltet werden. Damit soll verhindert werden, dass der Verbrennungsmotor im fahrenden Betrieb abgeschaltet wird. Das Verfahren geht in diesem Fall wieder zu dem ersten Schritt (1). Der Fahrer seinerseits hat die Möglichkeit im Falle einer Signalisierung der Brandgefahr zu reagieren und das Fahrzeug bei nächster Gelegenheit abzustellen oder anderweitig für Abkühlung zu sorgen.

Unterschreitet die Geschwindigkeit V_Fahrzeug die Grenzgeschwindigkeit V_Grenz, so schaltet das Verfahren in einem nachgeordneten Schritt (9) den Verbrennungsmotor ab.

In der in der Fig. dargestellten Ausführungsform wird vor der Abschaltung des Verbrennungsmotors die geplante Abschaltung dem Fahrer und/oder dem Fahrzeug in einem Schritt (8) signalisiert. Damit ist es für den Fahrer möglich, auf die geplante Abschaltung geeignet zu reagieren und beispielsweise das Fahrzeug zu parken.

In einer alternativen Ausführungsform kann der Fahrer die Abschaltung des Verbrennungsmotors durch Betätigung eines Schalters verhindern. Ebenso kann vorgesehen sein, einen Neustart des Verbrennungsmotors zuzulassen. Dabei kann vorgesehen sein, den Motor endgültig für eine Abkühlzeit abzuschalten, wenn das Fahrzeug nach Neustart trotz Brandgefahr oder nach Unterdrückung einer Abschaltung nicht bewegt wird.

Mit dem erfindungsgemäßen Verfahren können ein oder mehrere Katalysatoren, regenerierbare Filtersysteme oder ähnliche Technologien unabhängig voneinander oder gemeinsam überwacht werden.

## Patentansprüche

1. Verfahren zur Steuerung eines Verbrennungsmotors mit einem Katalysator, welches eine Temperatur des Katalysators erfasst,
**dadurch gekennzeichnet, dass**
- weitere temperaturrelevante Fahrzeug- und Umgebungsdaten erfasst werden,
- eineKennfeldauswertung der Temperatur des Katalysators und der temperaturrelevanten Fahrzeug- und Umgebungsdaten erfolgt,
- wobei das Ergebnis der Kennfeldauswertung eine Bewertung der Brandgefahr ist,
- wobei bei Vorliegen einer Brandgefahr der Verbrennungsmotor abgeschaltet wird.

2. Verfahren nach Anspruch 1,
**dadurch gekennzeichnet, dass**
als temperaturrelevante Fahrzeug- und Umgebungsdaten eine Geschwindigkeit des Fahrzeugs erfasst wird.

3. Verfahren nach einem der Ansprüche 1 bis 2,
**dadurch gekennzeichnet, dass**
als temperaturrelevante Fahrzeug- und Umgebungsdaten ein Drehmoment des Verbrennungsmotors erfasst wird.

4. Verfahren nach einem der Ansprüche 1 bis 3,
**dadurch gekennzeichnet, dass**
als temperaturrelevante Fahrzeug- und Umgebungsdaten eine Außentemperatur erfasst wird.

5. Verfahren nach einem der Ansprüche 1 bis 4,
**dadurch gekennzeichnet, dass**
- bei Bestehen einer Brandgefahr die Fahrgeschwindigkeit des Fahrzeugs ermittelt wird,
- der Verbrennungsmotor nur dann abgeschaltet wird, wenn das Fahrzeug eine vorgebbare Geschwindigkeitsgrenze unterschreitet.

6. Verfahren nach einem der Ansprüche 1 bis 5,
**dadurch gekennzeichnet, dass**
bei Brandgefahr eine Signalisierung der Brandgefahr an den Fahrer erfolgt.

7. Verfahren nach einem der Ansprüche 1 bis 6,
**dadurch gekennzeichnet, dass**
eine Signalisierung einer bevorstehenden Abschaltung des Verbrennungsmotors an den Fahrer erfolgt.

8. Verfahren nach Anspruch 1 bis 7,
**dadurch gekennzeichnet, dass**
der Fahrer die Abschaltung des Verbrennungsmotors durch Betätigung eines Starters verhindern kann.

9. Verfahren nach einem der Ansprüche 1 bis 8,
**dadurch gekennzeichnet, dass**
ein Neustart des abgeschalteten Verbrennungsmotors zugelassen wird.

10. Verfahren nach Anspruch 8 oder 9,
**dadurch gekennzeichnet, dass**
eine erneute Abschaltung des Verbrennungsmotors für eine vorgebbare Abkühlzeit erfolgt, wenn das Fahrzeug nach Ablauf einer Toleranzzeit nach einem Neustart oder der Verhinderung einer Abschaltung nicht bewegt wurde.

## Claims

1. Method of controlling an internal combustion engine with a catalytic converter which detects a temperature of the catalytic converter,
**characterised in that**
- other temperature-relevant data pertaining to the vehicle and ambient environment is detected,
- an evaluation of the characteristic map of the temperature of the catalytic converter and temperature-relevant data pertaining to the vehicle and ambient environment is run,
- the result of the evaluation of the characteristic map being an assessment of the fire risk,
- and if there is a risk of fire, the internal combustion engine is switched off.

2. Method as claimed in claim 1,
**characterised in that**
a speed of the vehicle is detected as the temperature-relevant data pertaining to the vehicle and ambient environment.

3. Method as claimed in one of claims 1 to 2,
**characterised in that**
a torque of the internal combustion engine is detected as the temperature-relevant data pertaining to the vehicle and ambient environment.

4. Method as claimed in one of claims 1 to 3,
**characterised in that**
an external temperature is detected as the temperature-relevant data pertaining to the vehicle and ambient environment.

5. Method as claimed in one of claims 1 to 4,
**characterised in that**
- if a fire risk exists, the driving speed of the vehicle is detected,
- the internal combustion engine is only switched off if the vehicle drops below a pre-settable speed threshold.

6. Method as claimed in one of claims 1 to 5,
**characterised in that**
if there is a fire risk, a signal is emitted to the driver indicating the fire risk.

7. Method as claimed in one of claims 1 to 6,
**characterised in that**
a signal is emitted indicating an impending shut-down of the internal combustion engine.

8. Method as claimed in claims 1 to 7,
**characterised in that**
the driver can prevent the internal combustion engine from being switched off by operating a starter.

9. Method as claimed in one of claims 1 to 8,
**characterised in that**
the switched-off internal combustion engine is allowed to be started again.

10. Method as claimed in claim 8 or 9,
**characterised in that**
the internal combustion engine is switched off again for a pre-settable cooling time if the vehicle is not moved after a tolerance period has elapsed following a re-start or prevention of a shut-down.

## Revendications

1. Procédé de commande d'un moteur à combustion interne avec un catalyseur, lequel enregistre une température du catalyseur, **caractérisé en ce que**
- d'autres données du véhicule et de l'environnement significatives pour la température sont enregistrées,
- il est effectué une analyse du diagramme caractéristique de la température du catalyseur et des données du véhicule et de l'environnement significatives pour la température,
- le résultat de l'analyse du diagramme caractéristique étant une évaluation du risque d'incendie,
- le moteur à combustion interne étant arrêté en présence d'un risque d'incendie.

2. Procédé selon la revendication 1, **caractérisé en ce que** parmi les données du véhicule et de l'environnement, significatives pour la température, enregistrées figure une vitesse du véhicule.

3. Procédé selon l'une quelconque des revendications 1 à 2, **caractérisé en ce que** parmi les données du véhicule et de l'environnement, significatives pour la température, enregistrées figure un couple de rotation du moteur à combustion interne.

4. Procédé selon l'une quelconque des revendications 1 à 3, **caractérisé en ce que** parmi les données du véhicule et de l'environnement, significatives pour la température, enregistrées figure une température extérieure.

5. Procédé selon l'une quelconque des revendications 1 à 4, **caractérisé en ce que**
- en présence d'un risque d'incendie, la vitesse de déplacement du véhicule est déterminée,
- le moteur à combustion interne est arrêté uniquement lorsque la vitesse du véhicule est inférieure à une limite de vitesse prédéfinissable.

6. Procédé selon l'une quelconque des revendications 1 à 5, **caractérisé en ce que**, en présence d'un risque d'incendie, le risque d'incendie est signalé au conducteur du véhicule.

7. Procédé selon l'une quelconque des revendications 1 à 6, **caractérisé en ce qu'**un arrêt imminent du moteur à combustion interne est signalé au conducteur du véhicule.

8. Procédé selon l'une quelconque des revendications 1 à 7, **caractérisé en ce que** le conducteur peut empêcher l'arrêt du moteur à combustion interne moyennant l'actionnement d'un starter.

9. Procédé selon l'une quelconque des revendications 1 à 8, **caractérisé en ce qu'**un nouveau démarrage du moteur à combustion interne à l'arrêt est autorisé.

10. Procédé selon la revendication 8 ou 9, **caractérisé en ce qu'**un nouvel arrêt du moteur à combustion interne pour un temps de refroidissement prédéfinissable s'effectue lorsque le véhicule n'a pas été déplacé à la fin d'une période de tolérance à la suite d'un nouveau démarrage ou de l'empêchement d'un arrêt.
